# EUROPEAN PATENT SPECIFICATION

(11) **EP 3 834 467 B1**
(45) Date of publication and mention of the grant of the patent: **28.06.2023**
(21) Application number: 19750217.2
(22) Date of filing: 26.07.2019
(51) Int. Cl.: H04W 28/02

(54) **METHOD FOR HANDLING OF NETWORK SLICE OVERLOAD**
VERFAHREN ZUM HANDHABEN VON NETZSCHEIBENÜBERLAST
PROCÉDÉ POUR MANIPULER UNE SURCHARGE DE TRANCHE DE RÉSEAU

(30) Priority: 10.08.2018 SE 1830240
(43) Date of publication of application: 16.06.2021
(73) Proprietor: Sony Group Corporation, Tokyo 108-0075 (JP)
(72) Inventor: NORD, Lars, 221 88 Lund (SE); BERGGREN, Anders, 221 88 Lund (SE)
(74) Representative: Neij & Lindberg AB
(86) International application number: PCT/US2019/043777
(87) International publication number: WO 2020/033174

(56) References cited:
- WO-A1-2018/034924
- SAMSUNG: "P-CR 23.501 S-NSSAI based Congestion Control", 3GPP DRAFT; S2-178691 PCR 23.501 S-NSSAI BASED CONGSETION CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. SA WG2, no. Reno, USA; 20171127 - 20171201 21 November 2017 (2017-11-21), XP051379698, Retrieved from the Internet: URL:http://www.3gpp.org/ftp/tsg%5Fsa/WG2%5 FArch/TSGS2%5F124%5FReno/Docs/ [retrieved on 2017-11-21]
- "3rd Generation Partnership Project; Technical Specification Group Services and System Aspects; System Architecture for the 5G System; Stage 2 (Release 15)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.5.0, 13 November 2017 (2017-11-13), pages 1-170, XP051391713, [retrieved on 2017-11-13] cited in the application
- HUAWEI ET AL: "TS 23.501: Overload control and NAS level congestion control for AMF shared by multiple network slices", 3GPP DRAFT; S2-179440_9299_8612 TS23.501_TS OVERLOAD CONTROL AND NAS LEVEL CONGESTION CONTROL FOR AMF_V1.2, 3RD GENERATION PARTNERSHIP PROJECT (3GPP), MOBILE COMPETENCE CENTRE ; 650, ROUTE DES LUCIOLE , vol. SA WG2, no. Reno, Nevada, USA; 20171127 - 20171201 30 November 2017 (2017-11-30), XP051365905, Retrieved from the Internet: URL:http://www.3gpp.org/ftp/Meetings%5F3GP P%5FSYNC/SA2/Docs/ [retrieved on 2017-11-30]
- ERICSSON: "Inclusion of NSSAI in RRC connection establishment", 3GPP DRAFT; R2-1809943 - INCLUSION OF NSSAI IN RRC CONNECTION ESTABLISHMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Montreal, Canada; 20180702 - 20180706 1 July 2018 (2018-07-01), XP051467181, Retrieved from the Internet: URL:http://www.3gpp.org/ftp/Meetings%5F3GP P%5FSYNC/RAN2/Docs [retrieved on 2018-07-01]

## Description

### TECHNICAL FIELD OF THE INVENTION

The technology of the present disclosure relates generally to cellular network operation and, more particularly, to a system and method for handling network operations when a network slice is experiencing an overload.

### METHOD FOR HANDLING OF NETWORK SLICE OVERLOAD

### BACKGROUND

Work is ongoing in the Third Generation Partnership Project (3GPP) related to core network (CN) slicing and network slice overload control. Currently if a user equipment (UE) performs a service request, the core network may reject the service request in the case of overload. This requires unnecessary signaling over the radio interface in that a complete radio resource control (RRC) connection setup procedure needs to be initiated. Providing slice-related barring information in system information has been proposed for unified access barring, but this only handles uplink generated access from the UE.

In the case where the UE is in idle mode and for which there is downlink data (MT) incoming from an external source, and there is an overload in a limited part of the network, there is no current solution to facilitate handling of the situation. As currently specified, within the UE's registered area, the UE may be served by multiple session management functions (SMFs) of respective network slices (depending on the service areas of the SMF and user plane function (UPF) in each network slice), but only one core access and mobility management function (AMF) for all network slices serves the UE. During idle mode mobility, the UE will perform cell reselection and may start to camp on a cell that belongs to a service area of a network slice that is experiencing slice specific overload. When a downlink data notification is sent from the SMF/UPF where the UE was last active to the AMF, the AMF will trigger paging of the UE. The AMF will invoke a paging strategy that starts to page the UE in the last known cell for the UE. If the UE does not respond to the page, the paging will escalate to eventually cover the entire registered area.

In instances where a network slice (e.g., SMF/LTPF) is overloaded in a local service area, the overloaded network slice should be blocked for traffic but the network should allow traffic for the slice in other service areas covered by the total registration area. Thus, if the UE moves to another cell, the service could again be provided. But the AMF would not know which part of the network that suffers from network slice overload. Also, in terms of core network architecture, the mobility management function should be separated from the session management function.

3GPP S2-178691 relates to S-NSSAI based congestion, wherein a S-NSSAI is related to several network slice instances, and the SMF determines the congestion of a S-NSSAI. 3GPP S2-179440 relates to RAN based slice congestion control, wherein the AMF indicates the S-NSSAI of a congested slice to the RAN; if the RAN then receives an UL message that includes this S-NSSAI, it rejects the message and the signaling is not routed to the AMF.

### SUMMARY

In view of the foregoing, it is desirable to enhance the way network slice overload conditions are handled. Disclosed are techniques for the core network to provide the radio access network (RAN) with assistance data related to overload control. The assistance data may be related to specific network slices. In this manner, the RAN may proactively handle various network situations, such as not paging a UE in certain network conditions. For example, the RAN nodes may support the core network by restricting paging of the UE in certain areas in case of an overload situation in the core network. As a result, more efficient signaling and overload management may be achieved.

According to one aspect of the disclosure, a method is carried out in a wireless communication network, the wireless communication network including a core network and an access network, the core network including a first management function having a first instance associated to a first network slice instance of the wireless communication network, the access network including a plurality of access network nodes. The method includes detecting, by the first management function of the core network, that the first network slice instance is overloaded; and transmitting, from the core network to at least one of the access network nodes that is in a service area associated to the first network slice instance, a message indicating overload of the first network slice instance in the service area, wherein the core network further includes a second management function, and the method further incudes transmitting, from the second management function of the core network to one of the access network nodes that is in the service area associated to the first network slice instance and that is associated to a cell on which a wireless communication device is camped, a paging request for the wireless communication device; and receiving, at the second management function from the access network node to which the paging request was transmitted, a paging response indicating that a page to the wireless communication device was omitted.

According to one embodiment of the method, the first management function has a second instance associated to a second network slice instance of the wireless communication network; and a wireless communication device is camped on a cell associated to one of the access network nodes that is in the service area associated to the first network slice instance, the wireless communication device formerly serviced by another access network node that is in a service area of the second network slice instance; and the method further includes transmitting, from a second management function of the core network to the access network node associated to the cell on which the wireless communication device is camped, a paging request for the wireless communication device, the paging request including network slice assistance information for at least one of the network slice instances serving a data session associated to the wireless communication device.

According to one embodiment of the method, the method further includes receiving, at the second management function from the second instance of the first management function, a message indicating downlink data for the wireless communication device is received; and wherein the transmitting of the paging request is made in response to the receiving at the second management function of the message indicating downlink data.

According to one embodiment of the method, the paging response is transmitted by the access network node in response to the access network node identifying that the overload of the first network slice instance applies to the data session associated to the wireless communication device.

According to one embodiment of the method, the access network node transmits the paging response instead of paging the wireless communication device to reactivate the data session.

According to one embodiment of the method, the method further includes transmitting from the access network node to the wireless communication device an overload condition page indicating that the wireless communication device should not expect downlink data for a temporary period.

According to one embodiment of the method, the method further includes upon receipt of the paging response, the second management function transmitting a message to the second instance of the first management function indicating that the wireless communication device could not be reached.

According to one embodiment of the method, the method further includes the second network slice instance dropping received downlink data for the wireless communication device and informing a source of the downlink data that the wireless communication device could not be reached.

### BRIEF DESCRIPTION OF THE DRAWINGS

FIG. 1 is a schematic diagram of a representative operational network environment for an electronic device, also referred to as a user equipment, the network environment shown without network slicing.
FIG. 2 is a schematic diagram of exemplary network functions during idle mode mobility of the user equipment and with network slicing.
FIG. 3 is an exemplary signaling diagram for signaling among the network functions and devices during idle mode mobility of the user equipment.

### DETAILED DESCRIPTION OF EMBODIMENTS

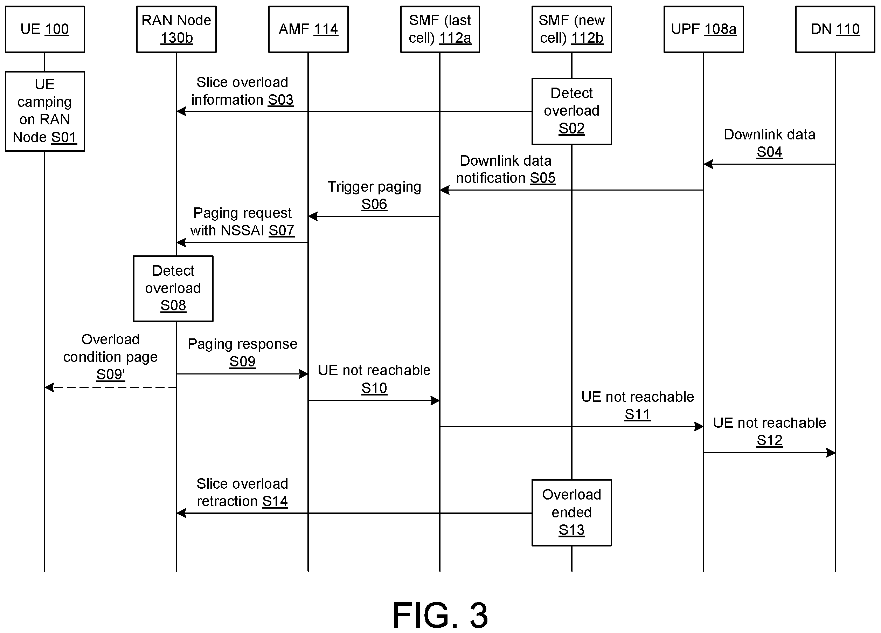

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments. The invention is described with reference to figure 3, while the description of the remaining figures is provided for illustrative purposes for a better understanding of the invention.

### System Architecture

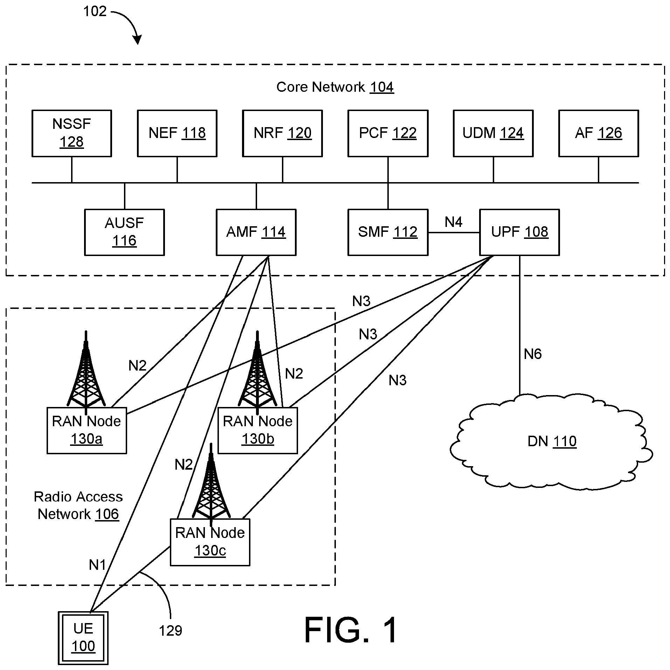

FIG. 1 is a schematic diagram of an exemplary network environment in which the disclosed techniques are implemented. It will be appreciated that the illustrated network environment is representative and other environments or systems may be used to implement the disclosed techniques. Also, various network functions may be carried out by a single device, such as a core network server, or may be carried out in a distributed manner across nodes of a computing environment.

The network environment is relative to an electronic device, such a user equipment (UE) 100. As contemplated by 3GPP standards, the UE may be a mobile radiotelephone (a "smartphone"). Other exemplary types of UEs 100 include, but are not limited to, a gaming device, a media player, a tablet computing device, a computer, and an internet of things (IoT) device. The UE 100 also may be referred to as a wireless communications device.

The network environment includes a wireless communication network 102 that is configured in accordance with one or more 3GPP standards, such as a 3G network, a 4G network or a 5G network. The wireless communication network 102 also may be referred to as a 3GPP network 102. The 3GPP network 102 includes a core network (CN) 104 and a radio access network (RAN) 106. FIG. 1 is a service-based representation to illustrate the 3GPP network 102, but other representations are possible, such as a reference point representation. The CN 104 includes a user plane function (UPF) 108 that provides an interface via tunnel N6 to a data network (DN) 110. The DN 110 represents operator services, connection to the Internet, third party services, etc.

The core network 104 includes one or more servers that host a variety of network management functions, illustrated examples of which include, but are not limited to, the UPF 108, a session management function (SMF) 112, a core access and mobility management function (AMF) 114, an authentication server function (AUSF) 116, a network exposure function (NEF) 118, a network repository function (NRF) 120, a policy control function (PCF) 122, a unified data management (UDM) 124, an application function (AF) 126 and a network slice selection function (NSSF) 128.

The RAN 106 includes a plurality of RAN nodes 130. In the illustrated example, there are three RAN nodes 130a, 130b, and 130c. Fewer than or more than three RAN nodes 130 may be present. Each RAN node 130 may be a base station such as an evolved node B (eNB) base station or a 5G generation gNB base station. The RAN nodes 130 may be more generically referred to as access network nodes. A radio link 129 may be established between the UE 100 and one of the RAN nodes 130 for providing wireless radio services to the UE 100. The RAN node 130 to which the radio link 129 is established will be referred to as the servicing RAN node 130 or servicing base station. Other RAN nodes 130 may be within communication range of the UE 100. The RAN 106 is considered to have a user plane and a control plane, the control plane implemented with radio resource control (RRC) signaling between the UE 100 and the RAN node 130. Another control plan between the UE 100 and the CN 104 may be present and implemented with non-access stratum (NAS) signaling.

A network tunnel N1 may be established between the AMF 114 and the UE 100. Network tunnels N2 may be established between the AMF 114 and the RAN nodes 130 in a service area of the AMF 114. Network tunnels N3 may be established between the UPF 108 and the RAN nodes 130 in a service area of the UPF 108. A network tunnel N4 may be established between the SMF 112 and UPF 108. Other network tunnels may be established.

Typically, each RAN node 130 includes a control circuit (not illustrated) that is responsible for overall operation of the RAN node 130, including controlling the RAN node 130 to carry out the operations described in herein. In an exemplary embodiment, the control circuit may include a processor (e.g., a central processing unit (CPU), microcontroller, or microprocessor) that executes logical instructions (e.g., lines or code, software, etc.) that are stored by a memory (e.g., a non-transitory computer readable medium) of the control circuit in order to carry out operation of the RAN node 130. The RAN node 130 also includes a wireless interface (not shown), such as a radio transceiver, for establishing an over the air connection with the UE 100. The RAN node 130 also includes an interface (not shown) to the core network 104, which typically includes operative connectivity to the AMF 114 and the UPF 108. The RAN node 130 also includes an interface (not shown) to one or more neighboring RAN nodes 130 for conducting network coordination in the RAN 106.

A core network function server (not shown) of the core network 104 may be responsible for carrying out one or more of the core network management functions. For example, the server may execute logical instructions (e.g., in the form of one or more software applications) to carry out one or more of the functions of the core network 104. For this purpose, the server may be implemented as a computer-based system that is capable of executing computer applications (e.g., software programs) that, when executed, carry out functions of the server. As is typical for a computing platform, the server may include a non-transitory computer readable medium, such as a memory that stores data, information sets and software, and a processor for executing the software. The processor and the memory may be coupled using a local interface. The local interface may be, for example, a data bus with accompanying control bus, a network, or other subsystem. The server may have various input/output (I/O) interfaces for operatively connecting to various peripheral devices, as well as one or more communications interfaces. The communications interface may include for example, a modem and/or a network interface card. The communications interface may enable the server to send and receive data signals to and from other computing devices in the core network, in the RAN 106, and/or in other locations as is appropriate.

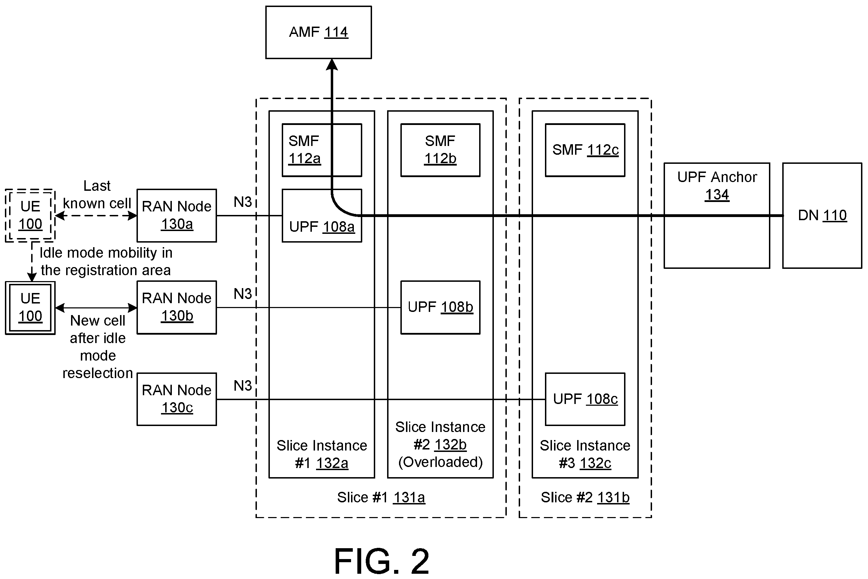

With additional reference to FIG. 2, selected network functions and components are illustrated during idle mode mobility of the UE 100 and with network slicing. A network slice and a network slice instance are defined in TS 23.501. A network slice is "a logical network that provides specific network capabilities and network characteristics." A network slice instance is "a set of network function instances and the required resources (e.g. compute, storage and networking resources) which form a deployed network slice." It is possible that a network slice instance, which includes the physical nodes of the slice, may be locally overloaded in a service area.

In FIG. 2, portions of the core network 104 are divided into network slices. In the illustrated embodiment, there are two network slices 131a and 131b. Fewer than or more than two network slices 131 may be present. In the representative embodiment of FIG. 2, the network slices 131 are implemented by three network slice instances 132a, 132b and 132c with network slice instances 132a and 132b implementing network slice 131a and network slice instance 132c implementing network slice 131b. Each network slice instance 132 may have an SMF 112 instance, shown using reference numerals 112a, 112b, and 112c for the three network slice instances 132a, 132b, and 132c, respectively. Each network slice instance 132 also may have a UPF 108 instance, shown using reference numerals 108a, 108b, and 108c for the three network slice instances 132a, 132b, and 132c, respectively. As illustrated in FIG. 2, the network slice 131a is responsible for two services areas that are respectively associated to different SMFs 112 and UPFs 108b. In other words, the network slice 131a has two network slice instances 132 to cover the two service areas. In other embodiments, network slice instances 132 may have a common SMF 112 but respective UPFs 108. The instances of the UPFs 108 may have operative connection with the DN 110 via a UPF anchor 134.

Each network slice instance 132 has an associated service area with one or more RAN nodes 130 in the service area. In the illustrated representation, RAN node 130a is in the service area of the first network slice instance 132a, RAN node 130b is in the service area of the second network slice instance 132b, which is different than the service area covered by RAN node 130a, and RAN node 130c is in the service area of the third network slice instance 132b. More than one RAN node 130 may be present in the service area of a network slice instance 132. Also, a RAN node 130 may be in the service area of more than one network slice instance 132.

In the illustrated representation, the second slice instance 132b is in an overload condition and is connected to the RAN node 130b on which the UE 100 is camping.

As indicated, the representation of FIG. 2 shows the situation when the UE 100 is in idle mode mobility in a registration area of the UE 100. In the illustrated example, the UE 100 was last serviced by one of the RAN nodes 130 (e.g., RAN node 130a in FIG. 2) and one of the network slice instances 132 (e.g., network slice instance 132a in FIG. 2, which is not overloaded). In the illustrated example, the UE 100 has moved location and becomes camped on the cell associated to another RAN node 130 that is in the service area of another one of the network slice instances 132, which happens to be overloaded (e.g., camped on RAN node 130b in service area of network slice instance 132b). Thus, in the illustrated example, RAN node 130a is considered associated to the last known cell for the UE 100. Also, RAN node 130b is considered associated to the new cell for the UE 100 after idle mode reselection is made.

### Handling of Network Slice Overload

Techniques will be described for handling network slice overload, particularly during the idle mode mobility of the UE 100 represented in FIG. 2. According to some of the techniques, one or more of the RAN nodes 130 may support the core network 104 by restricting the paging of the UE 100 when the UE 100 is in the service area of an overloaded network slice instance 132. In one embodiment, an SMF 112 from one of the network slice instances 132 informs one or more RAN nodes 130 in the service area of an overloaded network slice instance 132 about the overload condition for the overloaded network slice instance 132. This may be carried out by the SMF 112 of the overloaded network slice instance 132 or may be carried out by an SMF 112 of another network slice instance 132. The overloaded network slice instance 132 may be identified by single network slice selection assistance information (S-NSSAI) transmitted by SMF 112 to the appropriate RAN node(s) 130.

In one embodiment, the SMF 112 to RAN 102 communication could use the service Namf_Communication_N1N2MessageTransfer, which allows any SMF 112 to forward information to the RAN node 130 via the AMF 114.

In the event that data for the UE 100 is received via a non-overloaded network slice instance 132 but is camped on a RAN node 130 in the service area of an overloaded network slice instance 132, a paging request message is sent from the AMF 114 to the RAN node 130 on which the UE 100 is camped. The paging request message may contain S-NSSAI that identifies the network slice 131 that the PDU session belongs to, which is the PDU session that tunneled downlink data to the UPF 108 that triggered the AMF 114 to send the paging request message.

In general, the AMF 114 is unaware of the network slice instance 132 overload situation due to separation of network functions. The RAN node 130 may assess the S-NSSAI sent earlier from the SMF 112 and/or the S-NSSAI contained in the paging request message. If the RAN node 130 determines that the UE 100 and RAN node 130 are in the service area of the overloaded network slice instance 132, then the RAN node 130 does not page the UE 100. The RAN node 130 sends a paging response message to the AMF 114 that the RAN node 130 omitted to page the UE 100 since the slice (S-NSSAI) was overloaded in this service area.

With additional reference to FIG. 3, shown is an exemplary signaling diagram for signaling among the network functions and devices during idle mode mobility of the UE 100. FIG. 3 may be considered to illustrate an exemplary process flow containing steps that may be collectively carried out by various components of the network 102. FIG. 3 also may be considered to illustrate exemplary process flows that each contain one or more steps carried out by respective individual components of the network 102. Although illustrated in a logical progression, the operations shown in FIG. 3 may be carried out in other orders and/or with concurrence between two or more operations. Therefore, the illustrated flow may be altered (including omitting steps) and/or may be implemented in other manners. The operations carried out by the various devices may be embodied in respective logical routines (e.g., software or lines of code) stored on non-transitory computer readable medium of the appropriate devices.

At step S01, the UE 100 moves from a last serving cell (e.g., the cell of RAN node 130a) to a "new" cell (e.g., the cell of RAN node 130b) within the registered area of the UE 100. The new cell is served by the UPF 108b (managed by "new" network slice instance 132b) that is different from the UPF 108a ("last" network slice instance 132a) serving the last known cell.

At step S02, the network slice instance 132b detects that it is temporarily overloaded. This detection may occur before, during or after step S01. In response to the detection at step S02, the SMF 112b of the network slice instance 132b transmits slice overload information to the RAN node(s) 130b in the service area of the network slice instance 132b at step S03. For instance, the SMF 112b of network slice instance 132b may transmit session management information including the S-NSSAI of the overloaded network slice. The RAN node(s) 130b may store this information in the event that the RAN node 130b receives a paging request message to page a UE 100.

At step S04, down link data belonging to a protocol data unit (PDU) session of the UE 100 is received by the UPF 108a that had the N3 tunnel to the RAN node 130a last serving the UE 100. In response to the receipt of downlink data at step S04, the UPF 108a sends a downlink data notification (DDN) to the SMF 112a of the network slice instance 132a to which the UPF 108a belongs at step 05. The DDN may be transmitted over the corresponding N4 tunnel. At step S06, the SMF 112a (which is not overloaded) reacts to the DDN by triggering the AMF 114 to start paging the UE 100. Due to idle mode mobility, the UE 100 is no longer in the service area of the corresponding network slice instance 132a. The UE 100 may be paged to reactivate the PDU session that the DDN belongs to.

In response to receipt of the trigger at step S06, the AMF 114 creates a paging request message that may include S-NSSAI related to the PDU session of the UE 100. To create the paging request message that includes S-NSSAI related to the PDU session of the UE 100, the AMF 114 may map the corresponding S-NSSAI to the PDU session ID or the AMF 114 may receive the S-NSSAI from the SMF 112a. Then, the AMF 114 sends the paging request message to the RAN node 130b on which the UE 100 is camped at step S07. This may occur after escalation of paging in the conventional manner. As indicated, the paging request message includes the added S-NSSAI. As mentioned, at step S03, the RAN node 130b on which the UE 100 is camped also has received information that the network slice instance 132b is overloaded from the corresponding SMF 112b.

From the S-NSSAI received in step S03 and step S07, the RAN node 130b will recognize that the paging request is for the UE 100 to reactivate its PDU session belonging to the overloaded network slice instance 132b. Therefore, at step S08, the RAN node 130b determines that the page corresponds to a service area served by an overloaded network slice instance 132b. Upon making this determination, the RAN node 130b will not page the UE 100. Instead, the RAN node 130b may transmit a paging response message at step S09 to the AMF 114. The paging response message may indicate that the RAN node 130b did not page the UE 100 since the network slice instance 132b is in an overloaded state.

In one embodiment, at step S09', the RAN node 130b may send a page to the UE 100 in addition to sending the paging response message. The page of step S09' is intended to inform the UE 100 that the UE 100 should not expect to receive any downlink traffic for a period of time or until a page to reactivate the PDU session is sent. In one embodiment, the page of step S09', may inform the UE 100 of the overload situation in the core network functions serving the UE 100. The page of step S09' may be sent individually to the UE 100 or also may be sent to other UEs 100 serviced by the overloaded network slice instance 132b in addition to the UE 100, or all UEs serviced by the RAN node 130b.

At step S10, in response to the paging response message from the RAN node 130b, the AMF 114 may send a return message to the SMF 112a of the last serving network slice instance 132a that the UE 100 is in an overloaded service area and no connection was established. The return message may include a reason value, which may indicate that the UE 100 was not requested to establish a connection due to the overload condition of the network slice instance 132b. Alternatively the value may indicate another reason. At step S11, the SMF 112a of the last serving network slice instance 132a may inform the corresponding UPF 108a that the UE 100 was not reachable. In turn, at step S12, the UPF 108a may drop the downlink data packet(s) received at step S04 and return to the DN 110 that the UE 100 could not be reached.

In step S13, the network slice instance 132b may determine that the overload condition has ended. Upon determining that the network slice instance 132b is no longer overloaded, the network slice instance 132b may transmit slice overload information to the RAN node(s) 130b in the service area of the network slice instance 132b. For instance, the SMF 112b of network slice instance 132b may transmit session management information in the form of S-NSSAI or may transmit a slice overload retraction message.

One feature of the process flow is that the SMF 112 updates one or more RAN nodes 130 about specific network slice instance overload conditions. Another feature is that the AMF 114 includes information about one or more network slices (e.g., in the form of S-NSSAI) in the paging request message. Another feature is that the RAN node 130 may respond back to AMF 114 with a cause value (e.g., temporary slice overload) as the reason why the UE 100 was not paged to reactivate the PDU session. These features may be employed individually or in any combination, or in combination with any other features described in this disclosure document.

The following aspects and embodiments thereof are not subject to the claims and are merely provided for illustrative purposes.

In an aspect of the disclosure, referred to as aspect A, a method is carried out in a wireless communication network having a wireless access network (RAN) including a plurality of RAN nodes and a core network having an access and mobility management function (AMF) and two or more network slice instances serving a protocol data unit (PDU) session with a user equipment, each slice instance having a session management function (SMF) and a user plane function (UPF), wherein a first of the slice instances is in an overloaded condition. The method includes: detecting, by the SMF of the first slice instance, the overload condition; and transmitting, from the SMF of the first slice instance to RAN nodes in a service area of the first slice instance, a slice instance overload indication message.

In an embodiment of aspect A, the overload condition is relative to a RAN node in the service area of the first slice instance on which the user equipment is camped, the user equipment formerly serviced by another of the RAN nodes in a service area of a second of the slice instances; and upon receiving a trigger to page the user equipment by the AMF due to downlink data for the user equipment received via the second slice instance, the AMF transmitting a paging request message to the RAN node on which the user equipment is camped, the paging request containing single network slice selection assistance information (S-NSSAI) of the slice instances serving the PDU session with the user equipment.

In a further embodiment, the trigger to page the user equipment is transmitted to the AMF by the second slice instance. Upon receiving the trigger the AMF maps the S-NSSAI of the corresponding PDU session that the SMF would like to reactivate.

In a further embodiment, the trigger to page the user equipment is transmitted to the AMF by the SMF of the second slice instance in response to receipt of a downlink data notification from the UPF of the second slice instance.

In a further embodiment, the AMF receives a paging response message from the RAN node on which the user equipment is camped indicating that the RAN node did not page the user equipment.

In a further embodiment, the paging response message is transmitted by the RAN node in response to the RAN node identifying the overload condition of the first slice instance applies to the PDU session with the user equipment.

In a further embodiment, the RAN node transmits the paging response message instead of paging the user equipment to reactivate the PDU session.

In a further embodiment, the RAN node also transmits an overload condition page to the user equipment indicating that the user equipment should not expect downlink traffic for a temporary period.

In a further embodiment, upon receipt of the paging response message, the AMF transmits a message to the SMF of the second slice instance indicating that the user equipment could not be reached.

In a further embodiment, the UPF drops received downlink data for the user equipment and returns to a source of the downlink data that the user equipment could not be reached.

In an aspect of the disclosure, referred to as aspect B, a method is carried out in a wireless communication network having a wireless access network (RAN) including a plurality of RAN nodes and a core network having an access and mobility management function (AMF) and two or more network slice instances serving a protocol data unit (PDU) session with a user equipment. The method includes: receiving a trigger to page the user equipment by the AMF due to downlink data for the user equipment received via one of the slice instances, and transmitting a paging request message to one or more of the RAN nodes, the paging request containing single network slice selection assistance information (S-NSSAI) of the slice instances serving the PDU session with the user equipment.

An alternative solution is that the AMF 114 could store the overload information from the SMF 132. In this case, the RAN 106 may broadcast network slice specific access barring information in the system information block (SIB). Also, the AMF 114 need not send a paging request to the RAN 106 at step S07 and may advance to step S10, thereby skipping steps S07 through S09. A disadvantage of this approach is that the approach may run contrary to the 3GPP core network design principle that the AMF 114 shall exclusively handle access and mobility functionality and the SMF 112 shall handle the user plane and session management. Under this policy, the overload information belongs in the SMF 112 and the RAN 106 as long as the overload is in the user plane or the SMF 112.

### Conclusion

Although certain embodiments have been shown and described, it is understood that modifications falling within the scope of the appended claims will occur to others who are skilled in the art upon the reading and understanding of this specification.

## Claims

1. A method carried out in a wireless communication network (102), the wireless communication network including a core network (104) and an access network (106), the core network including a first management function (112) in the form of a session management function, SMF, having a first instance associated to a first network slice instance (132) of the wireless communication network, the access network including a plurality of access network nodes (130), the method comprising:
detecting, by the first management function of the core network, that the first network slice instance is overloaded; and
transmitting, from the core network to at least one of the access network nodes that is in an SMF service area associated to the first network slice instance, a message indicating overload of the first network slice instance in the SMF service area; and
wherein the core network further includes a second management function (114), the method further comprising:
transmitting, from the second management function of the core network to one of the access network nodes that is in the SMF service area associated to the first network slice instance and that is associated to a cell on which a wireless communication device (100) is camped, a paging request for the wireless communication device; and
receiving, at the second management function from the access network node to which the paging request was transmitted, a paging response indicating that a page to the wireless communication device was omitted.

2. The method of claim 1, wherein:
the first management function has a second instance associated to a second network slice instance of the wireless communication network; and
a wireless communication device (100) is camped on a cell associated to one of the access network nodes that is in the SMF service area associated to the first network slice instance, the wireless communication device formerly serviced by another access network node that is in an SMF service area of the second network slice instance; and
the method further comprising:
transmitting, from a second management function (114) of the core network to the access network node associated to the cell on which the wireless communication device is camped, a paging request for the wireless communication device, the paging request including network slice assistance information for at least one of the network slice instances serving a data session associated to the wireless communication device.

3. The method of claim 2, wherein the method further comprises:
receiving, at the second management function from the second instance of the first management function, a message indicating downlink data for the wireless communication device is received; and
wherein the transmitting of the paging request is made in response to the receiving at the second management function of the message indicating downlink data.

4. The method of any of claims 1-3, wherein the paging response is transmitted by the access network node in response to the access network node identifying that the overload of the first network slice instance applies to the data session associated to the wireless communication device.

5. The method of any of claims 1-4, wherein the access network node transmits the paging response instead of paging the wireless communication device to reactivate the data session.

6. The method of any of claims 1-5, wherein the method further comprises:
transmitting from the access network node to the wireless communication device an overload condition page indicating that the wireless communication device should not expect downlink data for a temporary period.

7. The method of any of claims 1-6, wherein the method further comprises:
upon receipt of the paging response, the second management function transmitting a message to the second instance of the first management function indicating that the wireless communication device could not be reached.

8. The method of claim 7, wherein the method further comprises:
the second network slice instance dropping received downlink data for the wireless communication device and informing a source of the downlink data that the wireless communication device could not be reached.

9. The method of any of claims 1-8, wherein the second management function (114) is in the form of an access and mobility management function, AMF.

10. The method of any of claims 1-9, wherein the message indicating overload of the first network slice instance in the SMF service area is used at the at least one of the access network nodes for downlink data transmission overload control.

## Patentansprüche

1. Verfahren, ausgeführt in einem drahtlosen Kommunikationsnetzwerk (102), wobei das drahtlose Kommunikationsnetzwerk ein Kernnetzwerk (104) und ein Zugangsnetzwerk (106) enthält, das Kernnetzwerk eine erste Verwaltungsfunktion (112) in der Form einer Sitzungsverwaltungsfunktion, SMF, mit einer ersten Instanz, die mit einer ersten Netzwerk-Slice-Instanz (132) des drahtlosen Kommunikationsnetzwerks assoziiert ist, enthält, das Zugangsnetzwerk eine Vielzahl von Zugangsnetzwerksknoten (130) enthält, das Verfahren umfassend:
Detektieren, durch die erste Verwaltungsfunktion des Kernnetzwerks, dass die erste Netzwerk-Slice-Instanz überlastet ist; und
Übertragen, von dem Kernnetzwerk an mindestens einen der Zugangsnetzwerksknoten, der in einem SMF-Dienstbereich ist, der mit der ersten Netzwerk-Slice-Instanz assoziiert ist, einer Nachricht, die eine Überlastung der ersten Netzwerk-Slice-Instanz in dem SMF-Dienstbereich angibt; und
wobei das Kernnetzwerk ferner eine zweite Verwaltungsfunktion (114) enthält, das Verfahren ferner umfassend:
Übertragen, von der zweiten Verwaltungsfunktion des Kernnetzwerks an einen der Zugangsnetzwerksknoten, der in dem SMF-Dienstbereich ist, der mit der ersten Netzwerk-Slice-Instanz assoziiert ist und der mit einer Zelle assoziiert ist, in der sich eine drahtlose Kommunikationsvorrichtung (100) befindet, einer Funkrufanforderung für die drahtlose Kommunikationsvorrichtung; und
Empfangen, an der zweiten Verwaltungsfunktion von dem Zugangsnetzwerksknoten, an den die Funkrufanforderung übertragen wurde, einer Funkrufantwort, die angibt, dass ein Funkruf an die drahtlose Kommunikationsvorrichtung ausgelassen wurde.

2. Verfahren nach Anspruch 1, wobei:
die erste Verwaltungsfunktion eine zweite Instanz aufweist, die mit einer zweiten Netzwerk-Slice-Instanz des drahtlosen Kommunikationsnetzwerks assoziiert; und
eine drahtlose Kommunikationsvorrichtung (100), die sich in einer Zelle befindet, die mit einem der Zugangsnetzwerksknoten assoziiert ist, der in dem SMF-Dienstbereich ist, der mit der ersten Netzwerk-Slice-Instanz assoziiert ist, wobei die drahtlose Kommunikationsvorrichtung vorher durch einen anderen Zugangsnetzwerksknoten, der in einem SMF-Dienstbereich der zweiten Netzwerk-Slice-Instanz ist, versorgt wurde; und
das Verfahren ferner umfassend:
Übertragen, von einer zweiten Verwaltungsfunktion (114) des Kernnetzwerks an den Zugangsnetzwerksknoten, der mit der Zelle assoziiert ist, in der sich die drahtlose Kommunikationsvorrichtung befindet, einer Funkrufanforderung für die drahtlose Kommunikationsvorrichtung, die Funkrufanforderung enthaltend Netzwerk-Slice-Unterstützungsinformationen für mindestens eine der Netzwerk-Slice-Instanzen, die eine mit der drahtlosen Kommunikationsvorrichtung assoziierte Datensitzung versorgen.

3. Verfahren nach Anspruch 2, wobei das Verfahren ferner umfasst:
Empfangen, an der zweiten Verwaltungsfunktion von der zweiten Instanz der ersten Verwaltungsfunktion, einer Nachricht, die angibt, dass Abwärtsstreckendaten für die drahtlose Kommunikationsvorrichtung empfangen werden; und
wobei das Übertragen der Funkrufanforderung als Reaktion auf das Empfangen, an der zweiten Verwaltungsfunktion, der Nachricht, die Abwärtsstreckendaten angibt, erfolgt.

4. Verfahren nach einem der Ansprüche 1-3, wobei die Funkrufantwort durch den Zugangsnetzwerksknoten als Reaktion darauf, dass der Zugangsnetzwerksknoten identifiziert, dass die Überlastung der ersten Netzwerk-Slice-Instanz für die Datensitzung gilt, die mit der drahtlosen Kommunikationsvorrichtung assoziiert ist, übertragen wird.

5. Verfahren nach einem der Ansprüche 1-4, wobei der Zugangsnetzwerksknoten die Funkrufantwort überträgt, anstatt die drahtlose Kommunikationsvorrichtung per Funkruf anzurufen, um die Datensitzung zu reaktivieren.

6. Verfahren nach einem der Ansprüche 1-5, wobei das Verfahren ferner umfasst:
Übertragen, von dem Zugangsnetzwerksknoten an die drahtlose Kommunikationsvorrichtung, eines Überlastungszustand-Funkrufs, der angibt, dass die drahtlose Kommunikationsvorrichtung Abwärtsstreckendaten für einen vorübergehenden Zeitraum nicht erwarten sollte.

7. Verfahren nach einem der Ansprüche 1-6, wobei das Verfahren ferner umfasst:
nach Empfang der Funkrufantwort Übertragen, durch die zweite Verwaltungsfunktion, einer Nachricht an die zweite Instanz der ersten Verwaltungsfunktion, die angibt, dass die drahtlose Kommunikationsvorrichtung nicht erreicht werden konnte.

8. Verfahren nach Anspruch 7, wobei das Verfahren ferner umfasst:
Verwerfen, durch die zweite Netzwerk-Slice-Instanz, von empfangenen Abwärtsstreckendaten für die drahtlose Kommunikationsvorrichtung und Informieren einer Quelle der Abwärtsstreckendaten, dass die drahtlose Kommunikationsvorrichtung nicht erreicht werden konnte.

9. Verfahren nach einem der Ansprüche 1-8, wobei die zweite Verwaltungsfunktion (114) in der Form einer Zugangs- und Mobilitäts-Verwaltungsfunktion, AMF, ist.

10. Verfahren nach einem der Ansprüche 1-9, wobei die Nachricht, die eine Überlastung der ersten Netzwerk-Slice-Instanz in dem SMF-Dienstbereich angibt, an dem mindestens einen der Zugangsnetzwerksknoten für Abwärtsstreckendatenübertragung-Überlastungssteuerung verwendet wird.

## Revendications

1. Procédé mis en œuvre dans un réseau de communication sans fil (102), le réseau de communication sans fil comprenant un réseau central (104) et un réseau d'accès (106), le réseau central comprenant une première fonction de gestion (112) sous la forme d'une fonction de gestion de session, SMF, ayant une première instance associée à une première instance de tranche de réseau (132) du réseau de communication sans fil, le réseau d'accès comprenant une pluralité de noeuds de réseau d'accès (130), le procédé comprenant les étapes suivantes :
détecter, par la première fonction de gestion du réseau central, que la première instance de tranche de réseau est surchargée ; et
transmettre, à partir du réseau central, à au moins un des noeuds de réseau d'accès qui se trouve dans une zone de service SMF associée à la première instance de tranche de réseau, un message indiquant la surcharge de la première instance de tranche de réseau dans la zone de service SMF ; et
où le réseau central comprend en outre une seconde fonction de gestion (114), le procédé comprenant en outre les étapes suivantes :
transmettre, à partir de la seconde fonction de gestion du réseau central, à l'un des noeuds de réseau d'accès qui se trouve dans la zone de service SMF associée à la première instance de tranche de réseau et qui est associée à une cellule sur laquelle un dispositif de communication sans fil (100) est mis en attente, une demande de radiomessagerie pour le dispositif de communication sans fil ; et
recevoir, au niveau de la seconde fonction de gestion, depuis le noeud de réseau d'accès auquel la demande de radiomessagerie a été transmise, une réponse de radiomessagerie indiquant qu'une page destinée au dispositif de communication sans fil a été omise.

2. Procédé selon la revendication 1, dans lequel :
la première fonction de gestion a une seconde instance associée à une seconde instance de tranche de réseau du réseau de communication sans fil ; et
un dispositif de communication sans fil (100) est mis en attente sur une cellule associée à l'un des noeuds de réseau d'accès qui se trouve dans la zone de service SMF associée à la première instance de tranche de réseau, le dispositif de communication sans fil étant auparavant desservi par un autre noeud de réseau d'accès qui se trouve dans une zone de service SMF de la seconde instance de tranche de réseau ; et
le procédé comprenant en outre les étapes suivantes :
transmettre, depuis une seconde fonction de gestion (114) du réseau central au noeud de réseau d'accès associé à la cellule sur laquelle le dispositif de communication sans fil est mis en attente, une demande de radiomessagerie pour le dispositif de communication sans fil, la demande de radiomessagerie comprenant des informations d'assistance de tranche de réseau pour au moins une des instances de tranche de réseau desservant une session de données associée au dispositif de communication sans fil.

3. Procédé selon la revendication 2, dans lequel le procédé comprend en outre l'étape suivante :
recevoir, au niveau de la seconde fonction de gestion, à partir de la seconde instance de la première fonction de gestion, un message indiquant la réception de données en liaison descendante pour le dispositif de communication sans fil ; et
où la transmission de la demande de radiomessagerie est effectuée en réponse à la réception, par la seconde fonction de gestion, du message indiquant des données de liaison descendante.

4. Procédé selon l'une quelconque des revendications 1 à 3, dans lequel la réponse de radiomessagerie est transmise par le noeud de réseau d'accès en réponse à l'identification par le noeud de réseau d'accès que la surcharge de la première instance de tranche de réseau s'applique à la session de données associée au dispositif de communication sans fil.

5. Procédé selon l'une quelconque des revendications 1 à 4, dans lequel le noeud de réseau d'accès transmet la réponse de radiomessagerie au lieu de télé-avertir le dispositif de communication sans fil pour réactiver la session de données.

6. Procédé selon l'une quelconque des revendications 1 à 5, dans lequel le procédé comprend en outre l'étape suivante :
transmettre, par le noeud de réseau d'accès, au dispositif de communication sans fil, une page de condition de surcharge indiquant que le dispositif de communication sans fil ne doit pas s'attendre à recevoir des données en liaison descendante pendant une période temporaire.

7. Procédé selon l'une quelconque des revendications 1 à 6, dans lequel le procédé comprend en outre l'étape suivante :
recevoir la réponse de radiomessagerie, la seconde fonction de gestion transmettant un message à la seconde instance de la première fonction de gestion indiquant que le dispositif de communication sans fil n'a pas pu être atteint.

8. Procédé selon la revendication 7, dans lequel le procédé comprend en outre l'étape suivante :
abandonner, par la seconde instance de tranche de réseau, les données de liaison descendante reçues pour le dispositif de communication sans fil, et informer une source des données de liaison descendante que le dispositif de communication sans fil n'a pas pu être atteint.

9. Procédé selon l'une quelconque des revendications 1 à 8, dans lequel la seconde fonction de gestion (114) se présente sous la forme d'une fonction de gestion de l'accès et de la mobilité, AMF.

10. Procédé selon l'une quelconque des revendications 1 à 9, dans lequel le message indiquant la surcharge de la première instance de tranche de réseau dans la zone de service SMF est utilisé au niveau d'au moins l'un des noeuds de réseau d'accès pour le contrôle de surcharge de transmission de données en liaison descendante.
